# EUROPEAN PATENT APPLICATION

(11) **EP 2 184 945 A1**
(43) Date of publication of application: **12.05.2010**
(21) Application number: 09175282.4
(22) Date of filing: 06.11.2009
(51) Int. Cl.: H04W 76/02, H04W 36/14, H04W 76/04, H04W 88/06

(54) **Redirection during call set-up in a communication network**

(30) Priority: 07.11.2008 ES 200803186
(71) Applicant: Vodafone Group PLC, Newbury Berkshire RG14 2FN (GB); Vodafone España, S.A., 28108 Alcobendas (ES)
(72) Inventor: Diaz, Maria, 28050, Madrid (ES); Dominguez Romero, Francisco Javier, 28050, Madrid (ES); Urbano Ruiz, Julio, 28050, Madrid (ES)
(74) Representative: Keston, David Arthur

(57) **Abstract**

A call set-up method is described for use in a communication network, in particular a third generation mobile communication network. First, it is attempted to set-up a call between a call originator and a call destination using a communication connection of a first type, for example Voice over IP. In case that it is determined that the call cannot be set-up using the communication connection of the first type, a node in the communication network sets up the call to both the call originator and the call destination using a communication connection of a second type, for example Circuit Switched Adaptive Multi Rate voice call.

## Description

### Technical field

The present invention relates to a method for use in a communication network for setting up a call between a call originator and a call destination as well as to a corresponding communication network. More specifically, the present invention relates to such a method for use in a third generation cellular communication network.

### Description of related art

In third generation cellular networks, voice calls are being currently established trough the Circuit Switched (CS) Core Network. However, in coming years, there will be also an option to establish voice calls trough the Packet Switched (PS) Core Network with Voice over IP (VoIP).

The mobile terminal or User Equipment (UE) determines which one of the options for establishing the call is used, the CS Core Network or the PS Core Network. The UE initiates the call set-up by using the corresponding flow of signalling messages. These flows of signalling messages are independent flows without any connection.

So, for example, if the UE requests a VoIP call via the PS Core Network and there is any kind of problem, the voice call will not be established and the user will receive an error message, even if the CS Core Network is available for establishing the call.

US 6,222,829 B1 discloses a method and apparatus for effectuating voice communication between a mobile station and a mobile radio network. A gateway to the mobile radio network receives an incoming voice call for a destination mobile station and accesses information pertaining the status and location of the destination mobile station. A determination is made as to whether the destination mobile station is capable of operation in a voice mode using circuit-switched communications across a traffic channel. If the destination mobile station is operable in the circuit switched voice mode, a circuit-switched communication on a traffic channel is established between the mobile radio network and the destination mobile station. Otherwise, the incoming voice call is routed to a voice gateway which converts the voice call to data packets and routes the data packets to the mobile station across an Internet Protocol communication network to a packet gateway of the mobile radio network. The packet gateway routes the call across a packet data channel of the mobile radio network to the destination mobile station using a packet data service.

US 2008/0064389 A1 discloses a communication system and a method for redirecting a call to a call destination between multiple different operating modes. An attempt to establish a communication connection with the call destination is made via a first operating mode. Upon receipt of a rejection of the attempt to establish a communication connection, a determination is made as to a second operating mode, which is different from the first operating mode that is capable of supporting a communication with the call destination via a communication connection. A type of call data for the call is then converted from a type corresponding to the first operating mode to a type corresponding to the second operating mode, and the call data of the call having the converted type corresponding to the second operating mode is communicated using a communication connection established with the call destination via the second operating mode.

Both these prior art solutions suffer from the drawback that in case that there is a problem between the originating party and the communication network, the call is not established. This could occur for example in case of a UE supporting VoIP and CS voice calls and a Node B that does not support VoIP. In case that the UE initiates a VoIP call, the communication network will try to establish the call in vain. The UE will receive an error message, and the call will not be established.

A further drawback of these prior art solutions is that there is a need for a convertor in the communication network converting the circuit switched connection between the originating party and the network into a packet switched between the network and the destination party. Such a convertor adds to the complexity and the cost of the communication network. Furthermore, there is a need for proprietary signalling between the convertor and other network nodes, rendering the implementation of this solution in existing communication networks complicated.

### SUMMARY OF THE INVENTION

It is an object of the invention to provide a method for setting up a call in a communication network and a corresponding communication network that do not suffer from at least some of the drawbacks of prior art solutions.

Thereto, according to the invention a method and a communication network according to the independent claims are provided. Favourable embodiments are defined in the dependent claims.

According to an aspect of the invention, a method is provided for use in a communication network. It comprises the step of attempting to set-up a call between a call originator and a call destination using a communication connection of a first type. If it is determined that the call cannot be set-up using the communication connection of the first type, the communication network sets up the call to both the call originator and the call destination using a communication connection of a second type.

Preferably, the method is used in a third generation cellular network, in particular a UMTS network.

According to an embodiment, the communication connection of the first type is a circuit switched core network connection and the communication connection of the second type is a packet switched core network connection or the communication connection of the first type is a packet switched core network connection and the communication connection of the second type is a circuit switched core network connection.

According to a further embodiment, the call is a voice call and the voice call over the packet switched core network connection is a voice over IP call.

According to a still further embodiment, the step of determining is performed by detecting a signalling message regarding a call failure.

According to a further preferred embodiment, the step of the communication network setting up using the communication connection of the second type is performed by a network node by transmitting signalling messages that are also used for a normal call set-up using the communication connection of the second type. The network node preferably is a Radio Network Control Node (RNC).

In prior art third generation cellular networks voice calls established through the CS Core Network and PS Core Network are two independent processes. For this reason, there is no possibility to move from one process to the other in case of errors in one of them. According to the present invention both processes are interconnected in a transparent way for the user. There are several scenarios wherein the invention can be applied.

A first scenario is the case that the Radio Network doesn't support VoIP. In case that a UE, also referred to as User Equipment (UE) in this description, supporting VoIP calls in the PS domain and CS Adaptive Multi Rate (AMR) calls in the CS domain attempts to set-up a VoIP call and the Node B does not support VoIP, the RNC does not allow to establish a VoIP call and it directly sets-up a CS AMR call, normally resulting in successful call establishment for the user.

A second scenario occurs when the Radio Network supports VoIP, but the VoIP call is rejected. In case that VoIP is supported in the Node B, but for whatever reason the VoIP call is rejected, for example, because the radio network to which the call destination is connected does not support VoIP, the RNC acts as interconnection between both processes (VoIP call set-up and CS call set-up). When the RNC receives a "Rejection voice call" message from the PS core network domain, instead of passing it transparently to the user, it generates a new signalling message for voice call establishment that is sent to the CS core network domain and to the UE so that a CS AMR voice call is established. This signalling flow is transparent for users.

A third scenario occurs when the Radio Network supports VoIP, and a CS AMR call set-up by the UE is rejected. The RNC acts as interconnection between both processes, so when the RNC receives a "Rejection voice call" message from the CS network domain, instead of passing it transparently to the UE, it generates a signalling message for voice call establishment that is sent to the PS core network domain and the UE, in order to guarantee that a VoIP voice call is established. Again, this signalling flow is transparent for users.

The present invention may be implemented for ISDN numbers. In case of IP addresses being used, a database for translation from and to ISDN numbers is needed in some element of the communication network.

Preferably, the method according to the invention is implemented by means of a computer program loaded to the RNC.

According to a further aspect of the invention a communication network is provided comprising:
- means for attempting to set-up a call between a call originator and a call destination using a communication connection of a first type; and
- means for determining that the call cannot be set-up using the communication connection of the first type;
- characterised by means for setting up the call using a communication connection of a second type to both the call originator and the call destination.

These and other aspects of the invention will be apparent from and elucidated with reference to the embodiments described hereinafter.

### BRIEF DESCRIPTION OF THE DRAWINGS

The invention will be better understood and its numerous objects and advantages will become more apparent to those skilled in the art by reference to the following drawings, in conjunction with the accompanying specification, in which:
Figure 1 shows an architecture of a third generation cellular communications network wherein the present invention may be implemented.
Figure 2 shows a high level call flow of the set-up of a mobile voice over IP (VoIP) call.
Figure 3 shows the set-up of the VoIP call in more detail.
Figure 4 shows the typical call setup establishment of a circuit switched (CS) voice call in the mobile originating and mobile terminating case.
Figure 5 shows the set-up of a CS call in case that the Radio network does not support VoIP according to an embodiment of the present invention.
Figure 6 shows the case where the VoIP call is rejected due to a failure in the radio access network.
Figure 7 shows the case where the VoIP call is rejected due to a failure when establishing the Radio Bearer with the User Equipment (UE).
Figure 8 shows the case where the VoIP call is rejected due to a failure at the core network.
Figure 9 shows the set-up of a CS call in case that the VoIP call is rejected according to an embodiment of the present invention.
Figure 10 shows the case where the CS call is rejected due to a failure in the radio access network.
Figure 11 shows the case where the CS call is rejected due to a failure when establishing the Radio Bearer with the User Equipment (UE).
Figure 12 shows the case where the CS call is rejected due to a failure at the core network.
Figure 13 shows the set-up of a VoIP call in case that the CS call is rejected according to an embodiment of the present invention.

Throughout the figures like reference numerals refer to like elements.

### DETAILED DESCRIPTION OF THE PRESENT INVENTION

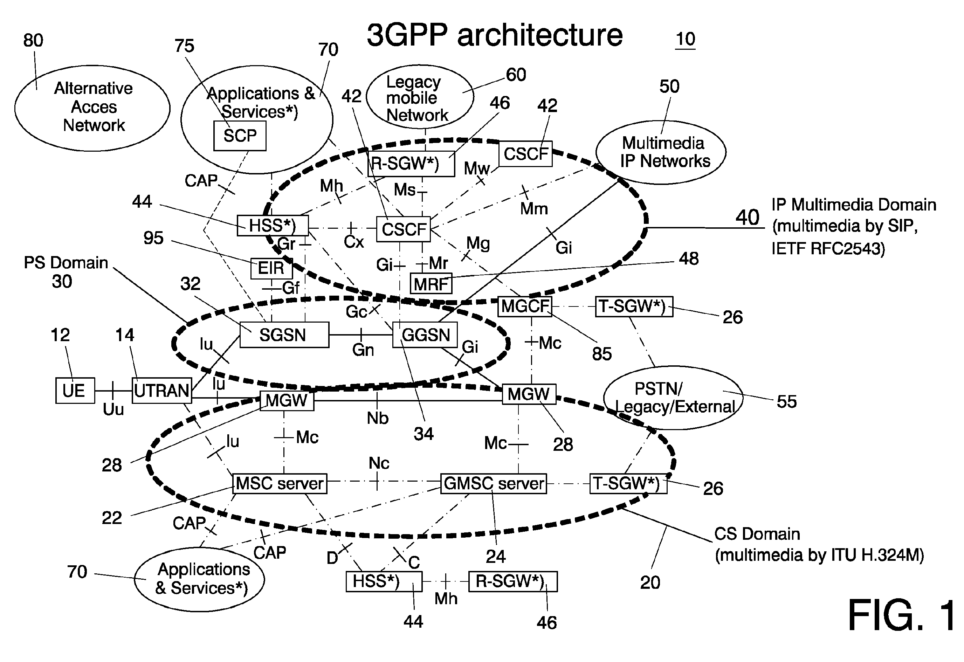

Figure 1 shows an exemplary architecture of a 3GPP cellular communication network 10 wherein the invention may be implemented. The figure shows a mobile terminal that will further be referred to in this description as User Equipment UE 12 that is connected to a UMTS Terrestrial Radio Access Network UTRAN 14 via a radio-interface. The Radio Access Network comprises a plurality of nodes B (not shown) communicating with the UE 12 and a plurality of Radio Network Control nodes (RNC, not shown), both RNC and Nodes B are included in the UTRAN (UMTS Terrestrial Radio Access Network). The communication network comprises furthermore a Core Network having a Circuit Switched (CS) Domain 20 that uses the ITU H.324M standard for multimedia data streams. The CS Domain 20 comprises a Mobile Switching Centre (MSC) server 22, a Gateway Mobile Switching Centre (GMSC) server 24, a Transport Signalling Gateway (T-SGW) 26 and Media GateWays (MGW) 28. The MSC server 22 and GMSC server 24 are connected to a Home Subscriber Server (HSS) 44, which at its turn is connected to a Roaming Signalling Gateway (R-SGW) 46. The CS domain 20 may be connected to one or more Legacy (i.e. not based on IP protocol) Public Switched Telephone Networks (PSTN) 55 and a Media Gateway Control Function (MGCF) 85. The Core Network furthermore comprises a Packet Switched (PS) Domain 30. The PS domain comprises a Serving GPRS Support Node (SGSN) 32, which may be connected to an Equipment Identity Register (EIR) 95, and a Gateway GPRS Support Node (GGSN). The GGSN is a network node that acts as a gateway to an IP Multimedia Domain 40 and to further Multimedia IP Networks 50. In the IP Multimedia Domain the SIP IETF RFC2543 protocol is used for multimedia data streams. The IP Multimedia domain comprises Call Session Control Functions (CSCF) 42, a Home Subscriber Server (HSS) 44, a Roaming Signalling Gateway (R-SGW) 46 and a Media Resource Functions (MRF) node 48. The IP Multimedia Domain 40 may be connected to one or more legacy mobile networks 60. There may be Applications & Services platforms 70 provided with a Service Control Point 75. There may be one or more alternative Access Networks 80 to access CS Domain 20 and PS Domain 30.

All nodes shown in figure 1 are well known to the skilled person and therefore there is no need to describe them in more detail here. They are interconnected by means of standardized interfaces as indicated in the figure. Also, these interfaces are well known to the skilled person. Furthermore, it should be understood that the architecture shown in figure 1 is exemplary and that the invention can be applied in cellular communication networks having other architectures as well.

First of all, the normal signalling flows, which are used for setting up a Voice over IP (VoIP) call and a CS voice call, are described. VoIP calls are established through the PS domain using the Session Initiation Protocol (SIP) protocol.

SIP is an application layer signalling protocol for creating, modifying and terminating sessions with one or more participants over an IP network. These sessions include telephone calls, multimedia conferences, instant messaging etc. using audio, video and data. SIP can invite both persons and services (such as a media storage service) to participate in a session and can also be used to set up calls between PSTN/PLMN subscribers using gateways. SIP is defined by Internet Engineering Task Force (IETF) in Request for Comments (RFC) 2543.

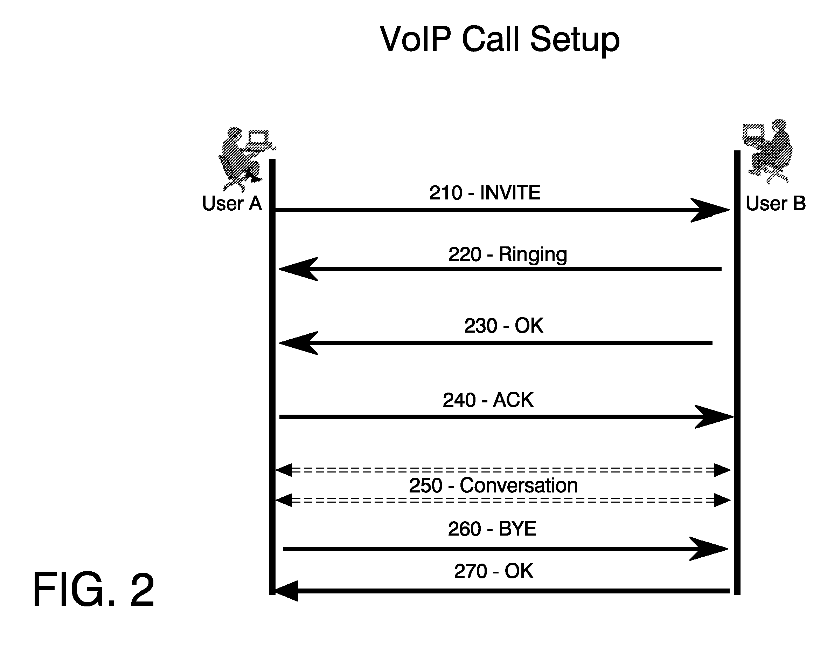

Figure 2 shows a high level call flow for setting up a mobile VoIP call. It comprises the following steps:
- INVITE: The call originator (User A) initiates a call session to the call destination (User B). The invite message 210 contains the IP address and call details of the session.
- Ringing: This response 220 indicates that called party has received the INVITE message and that User B is being informed of an incoming call from User A.
- OK: This response 230 indicates that User B has accepted the call initiated by User A.
- ACK: This message 240 indicates that User A has received the OK message 230 and supports the session proposed by User B.
- Conversation: A two-way communication channel is established over Real-time Transfer Protocol (RTP) and a communication 250 takes place between User A and B.
- BYE: User A sends a BYE request 260 to terminate the call session. BYE can be sent either by calling or called party.
- OK: This message 270 indicates that User B hangs up and the call session is terminated.

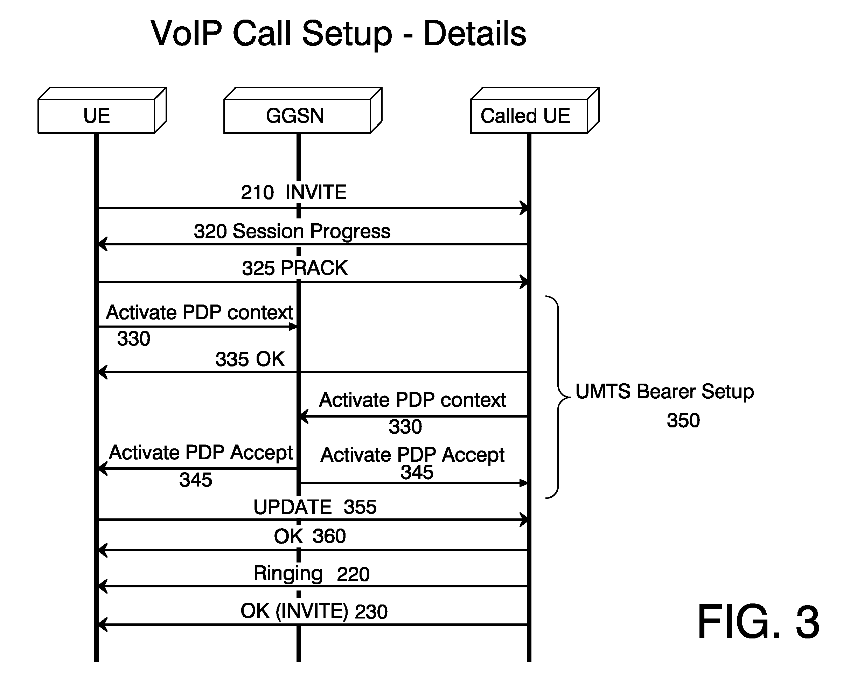

Figure 3 shows some more details of the setup of the VoIP call.
- The user terminal sends the initial INVITE message 210
- A session progress message 320 is sent back.
- The Caller now sends a PRACK message 325 to inform the called subscriber about the selected Codec.
- then the PDP (Packet Data Protocol) context has to be activated to setup the UMTS bearer by transmitting an Activate PDP context message 330 from the originating caller to the GGSN. Now that the codec to be used has been selected, the PDP context activation is initiated for allocating resources for meeting the Quality of Service (QoS) requirements for the codec.
- The called subscriber sends a PRACK acknowledgement message (OK 335). The message also indicates that quality of service for the session is met for the called subscriber.
- The final codec at the called side is determined. The PDP context activation is initiated to allocate resources for meeting the QoS of the terminating leg of the call by transmitting an Activate PDP context message 330 from the call destination to the GGSN.
- The caller and called PDP context activation is now completed by transmitting respective Activate PDP Accept messages 345. At this point, the caller and the called PDP contexts are both active. The Quality of Service (QoS) for the call can now be met. The message referenced as 330, 335 and 345 together result in the UMTS bearer set-up 350.
- UPDATE message 355: Since the caller PDP context has been activated, the called end is notified that the caller can now meet the quality of service in the send and receive direction.
- OK message 360 to acknowledge the UPDATE message.
- RINGING 220: Now all the resources for the call are in place. This message is to inform the calling subscriber to notify he has to wait for the answer of the called subscriber.
- The called party acknowledges by sending the OK message 230. The call is now ready to enter conversation mode.

So, in the two previous figures, the normal call setup of a Voice over IP call is shown.

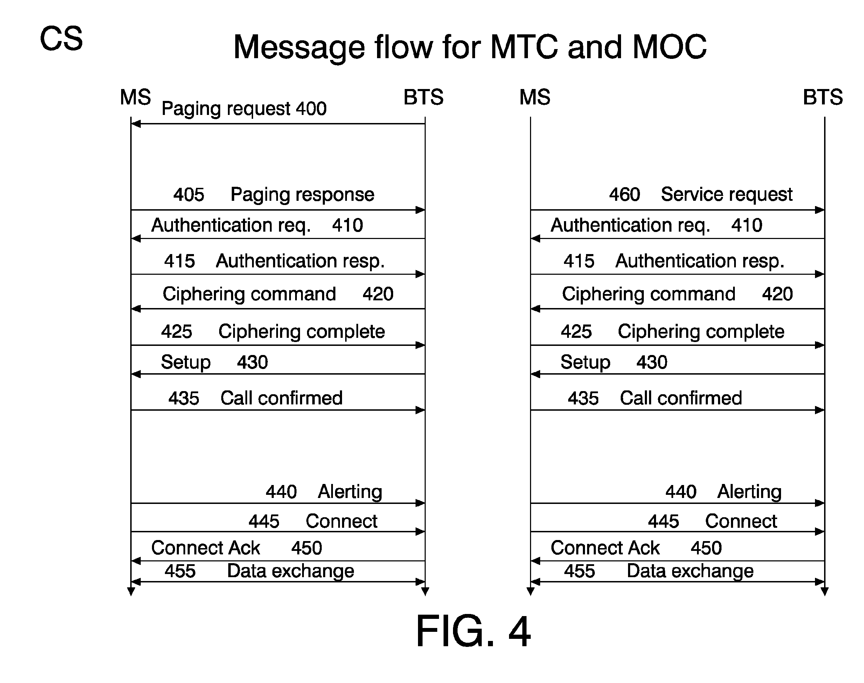

Figure 4 shows the typical call setup establishment of a CS Adaptive Multi Rate (AMR) voice call in the mobile originating and mobile terminating case.
For the case of the mobile terminating call, the flow is as follows:
- The mobile receives a Paging Request message 400 from the network.
- The mobile answers to the network with a Paging response message 405.
- The network initiates the authentication by sending an Authentication request message 410 to the mobile to authenticate the user.
- The mobile answers to the network with an Authentication response message 415.
- Once the mobile has been authenticated, the ciphering process starts, and the network sends to the mobile a ciphering command message 420.
- The mobile answers with a ciphering complete message 425 and starts the ciphering of the call between the UE and the RNC.
- After the ciphering communication, a setup message 430 is sent from the network to the mobile to setup the voice call with the phone number of the destination UE.
- The mobile confirms the call establishment through a call confirmed message 435.
- An alerting message 440 is sent from the mobile to the network.
- Then, a connect message 445 is sent from mobile to the network.
- Once the confirmation is received from the network by means of a connect ACK message 450, the voice call is established, and data exchanged 455.

From the mobile originating point of view the flow is as follows:
- The mobile tries to make a voice call, and it sends to the network a Service Request message 460.
- Before establishing the call, the network initiates the authentication process, by sending an Authentication request message 410 to the mobile.
- The mobile answers to the network with an Authentication response message 415.
- Once the mobile has been authenticated, the ciphering process starts, and the network sends to the mobile a ciphering command message 420.
- The mobile answers with a ciphering complete message 425.
- The mobile sends a setup message 430 to the network.
- Then, the network sends firstly a call confirmed message 435 followed by an alerting message 440, and a Connect message 445.
- At this point, the mobile answers with an ACK message 450, and then communication is established 455.

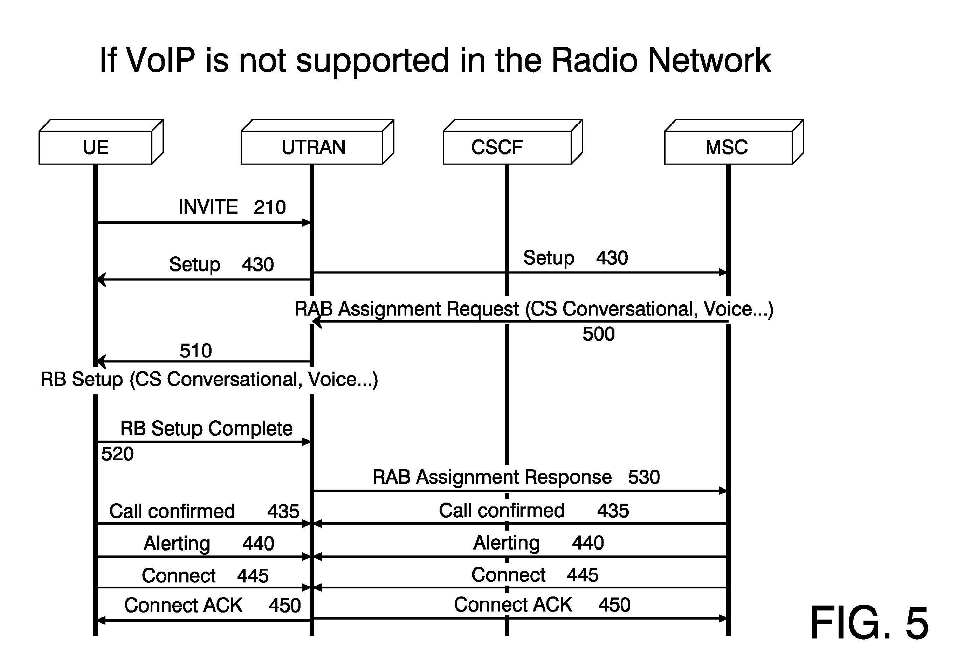

Now, it will be explained how a CS voice call is set-up in case that the Radio Access Network does not support VoIP. In case that the Node B does not support VoIP calls, then the RNC stops the INVITE message and initiates the CS AMR call to provide the voice resources. Thereto, the signalling messages are used that are used for normal CS call establishment. The call flow in this case is as depicted in figure 5.
- As soon as the RNC receives the INVITE message 210, a CS call setup is initiated from the RNC directly. The telephone number is obtained form the INVITE message of the beginning of the VoIP call.
- A SETUP message 430 is sent to both parties involved in the communication.
- Then, the MSC tries to establish a Radio Access Bearer (RAB) by sending a RAB Assignment Request 500. In the figure this is shown for the mobile originating part, but simultaneously the RAB is setup in the mobile terminating part.
- The RNC sends an RB (Radio Bearer) set-up message 510 for a CS radio bearer to the UE.
- The UE returns an RB set-up complete message 520 to the RNC.
- Once RB is setup, a RAB assignment response 530 is sent to the MSC.
- Then, call confirmed 435, alerting 440 and connect 445 are sent to the RNC and the RNC answers with a Connect ACK 450.

Now the case is described wherein the Radio Access Network supports VoIP, but the VoIP call is rejected. Some examples of call failure can be seen in the next figures.

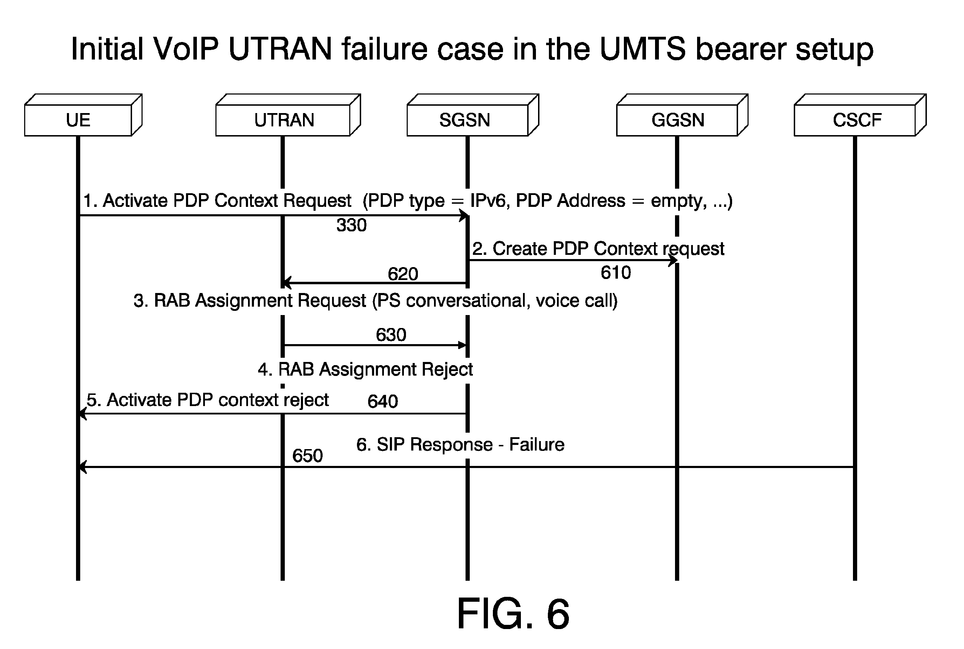

Figure 6 shows a UTRAN failure at the UMTS bearer establishment. That means that there is a problem in the RNC or in the Node B to setup this call. It can be because of congestion problems due to no PS resources being available at this time. The message flow is as follows:
- The UE tries to establish a VoIP call, and thereto it is necessary to establish a PDP context. Thereto, the UE sends an Activate PDP Context Request 330 to the SGSN, and the SGSN sends a Create PDP Context request to the GGSN 610.
- In order to succeed with the PDP context, it is necessary to establish a RAB, so the SGSN sends to the RNC a RAB Assignment Request 620 for a voice call over PS.
- If for some reason, it is not possible to establish a RAB, the RNC answers with a RAB Assignment Reject message 630 to the SGSN.
- As the RAB is not established, the SGSN sends an Activate PDP context reject 640 to the UE.
- Finally, there is a SIP Response Failure 650 sent from the network to the UE.

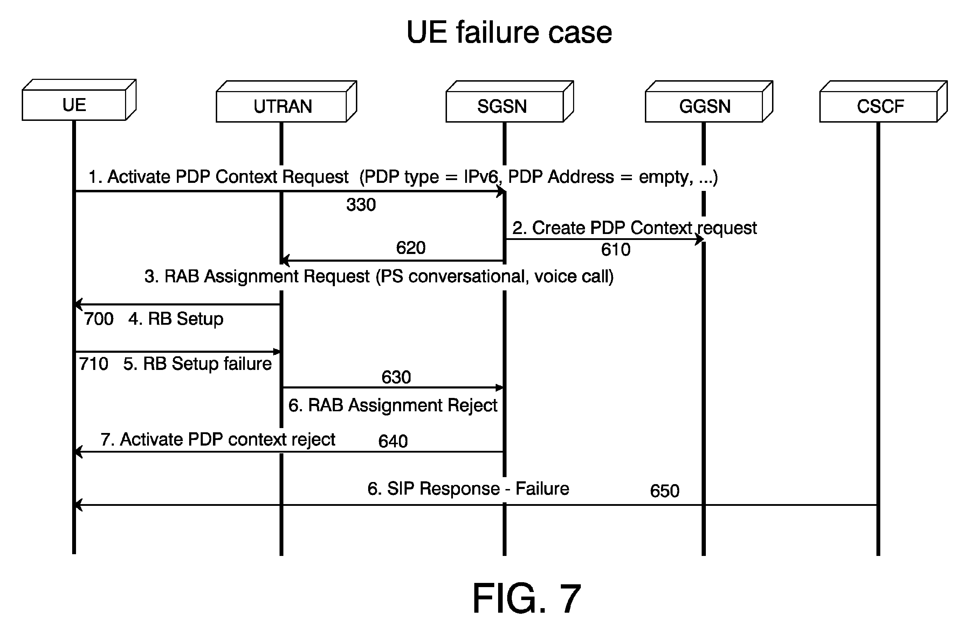

Figure 7 shows a case of a failure when establishing the Radio Bearer with the User Equipment (UE). The message flow is as follows:
- The UE tries to establish a VoIP call, and thereto it is necessary to establish a PDP context, so UE sends an Activate PDP Context Request 330 to the SGSN, and SGSN sends a Create PDP Context request 610 to the GGSN.
- In order to succeed with the PDP context, it is necessary to establish a RAB, so the SGSN sends to the RNC a RAB Assignment Request 620 for a voice call over PS.
- The RNC sends a RB Setup message 700 to the UE.
- If for some reason there is a problem, the UE sends a RB Setup failure message 710 to the RNC.
- The RNC answers with a RAB Assignment Reject message 630 to the SGSN.
- As no RAB is established, SGSN sends an Activate PDP context reject 640 to the UE.
- Finally, again, there is a SIP Response Failure 650 sent from the network to the UE.

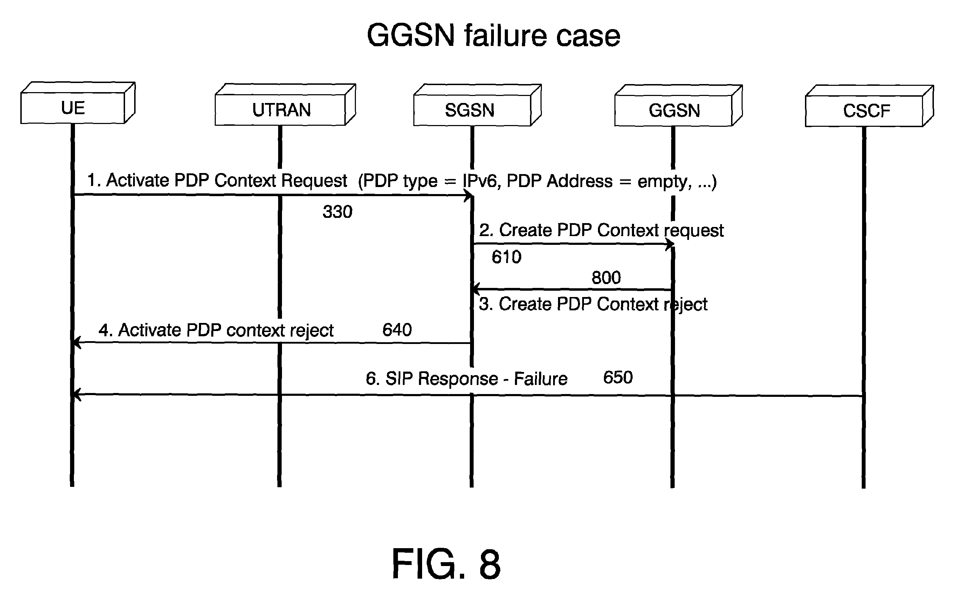

Figure 8 shows a failure case given at the GGSN side. The message flow is as follows:
- The UE tries to establish a VOIP call, and thereto it is necessary to establish a PDP context, so the UE sends an Activate PDP Context Request 330 to the SGSN, and the SGSN sends a Create PDP Context request 610 to the GGSN.
- If for some reason the GGSN can not establish a PDP context, it sends to the SGSN a Create PDP Context Reject 800, and then the SGSN sends to the mobile an Activate PDP Context Reject 640.
- Finally, there is a SIP Response Failure 650 sent from the network to the UE.

All these failures finish with a "SIP response of a failure of the call" message 650. There are 3 types of call failures that can be sent through the SIP protocol as defined in the Standard RFC 3261 (http://www.ietf.org/rfc/rfc3261.txt), namely SIP 4xx: Client failure, SIP 5xx: Server failure and SIP 6xx: Global failure.

According to the present invention, all these failures are dealt with by taking benefit of having another domain available to try to setup the call, maintaining the architecture of the 3GPP cellular networks. In this architecture the radio access network 14 (which includes the RNC) is connected to the MSC server 22 and to the IP Multimedia domain 40 through the SGSN 32.

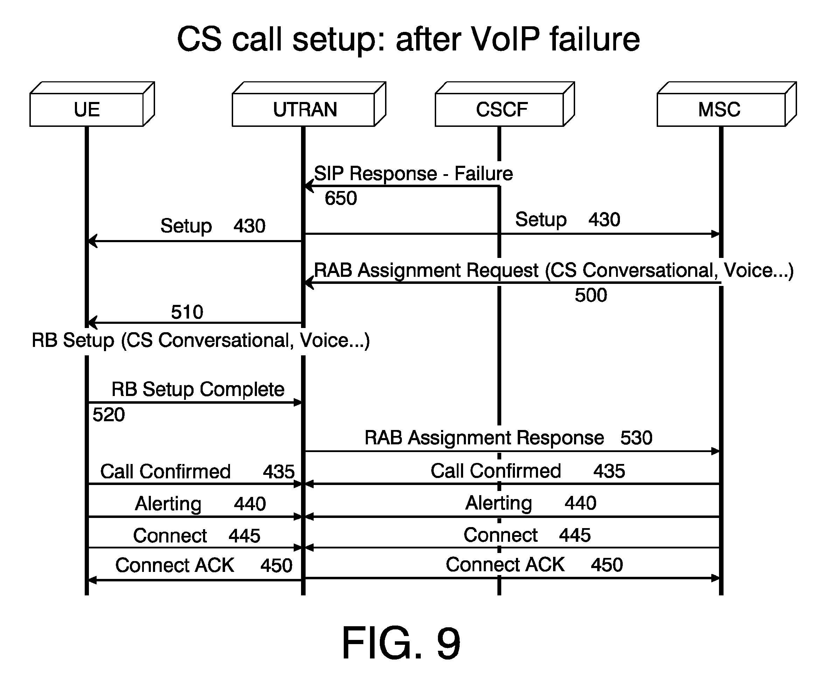

Figure 9 shows the call flow for a CS voice call set-up in case of a VoIP call failure.
- As soon as the Response SIP failure (4xx, 5xx or 6xx) message 650 is detected, a CS call setup is initiated. The telephone number in E.164 format is obtained from the INVITE message of the beginning of the VoIP call.
- A SETUP message 430 is sent by the RNC to both parties involved in the communication.
- Then, similarly as shown in figure 5, the MSC tries to establish a RAB. In the figure this process is shown the mobile originating part, but simultaneously, the RAB is setup in the mobile terminating part.
- Once RB is setup, a RAB Assignment response 530 is sent to the MSC.
- Then Call Confirmed 435, Alerting 440 and Connect 445 are sent to the RNC.
- The RNC answers with a Connect ACK 450.

Now the case is described wherein the Radio Access Network supports VoIP, the UE attempts to set-up a CS AMR voice call but this call is rejected. Some examples of such a call failure can be seen in the next figures.

In case there is a failure in one of the network elements anywhere in the network, a DISCONNECT message is sent to the UE. This is specified in 24.008 of the 3GPP standards. Many failure reasons can occur. Some examples with Radio network involvement are explained in the figures.

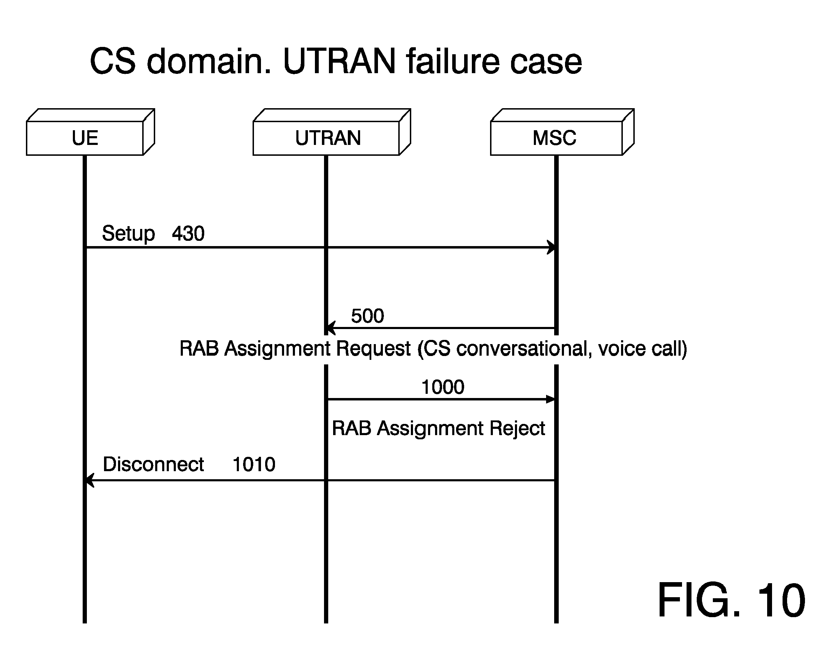

Figure 10: Failure in the RNC or Node B, for example due to no CS resources available at the time of the call setup. The message flow is as follows:
- After a Setup Message 430 is sent from the UE to the network when trying to establish a CS call, the MSC tries to establish a RAB, sending a RAB Assignment Request 500 to the RNC.
- If there is any failure at the UTRAN side, the RNC sends a RAB Assignment Reject message 1000 to the MSC.
- At this point, the MSC sends a Disconnect message 1010 to the UE.

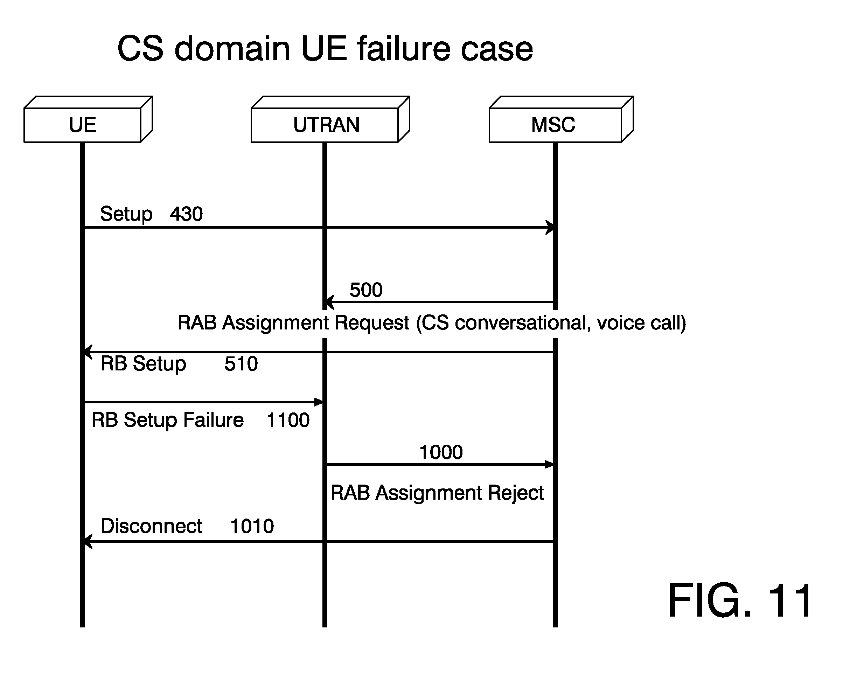

Figure 11: failure at the RB setup at the UE side. The message flow is as follows:
- After a Setup Message 430 is sent from the UE to the network when trying to establish a CS call, the MSC tries to establish a RAB, sending a RAB Assignment Request 500 to the RNC.
- The UTRAN tries to establish a RB, and the RNC sends a RB Setup message 510 to the UE
- If there is any failure at UE side, the UE sends an RB Setup failure 1100 to the RNC, and then the RNC sends to the MSC a RAB Assignment Reject message 1000.
- At this point, the MSC sends a 1010 Disconnect message to the UE.

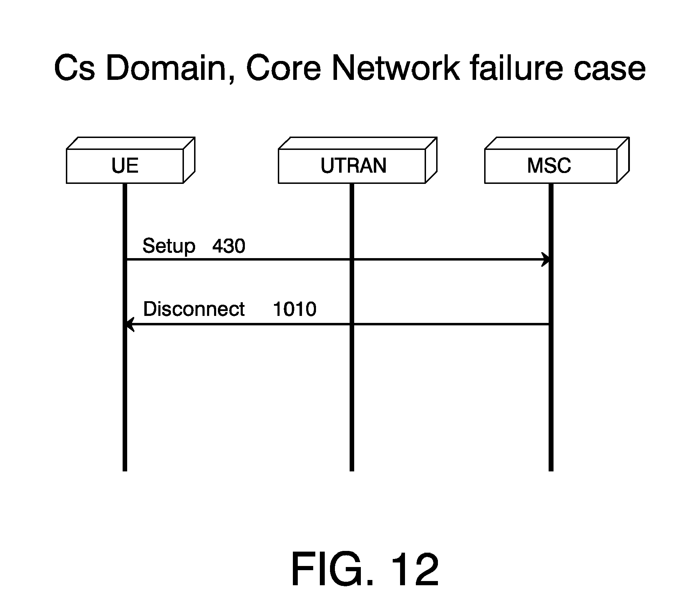

Figure 12: failure in the Core Network. The message flow is as follows:
- After a 430 Setup Message is sent from the UE to the network when trying to establish a CS call, if there is any problem in the core network to establish the voice call, the MSC sends a 1010 Disconnect Message to the UE.

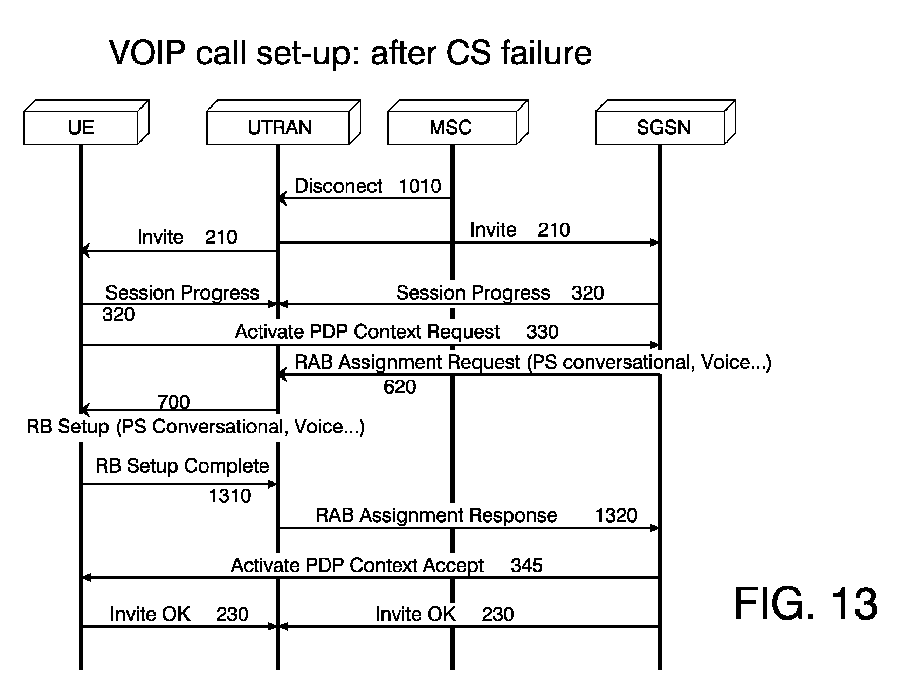

In all these cases a Disconnect message 1010 is sent towards the UE.
According to an embodiment of the present invention, as shown in figure 13:
- The RNC detects the Disconnect message 1010 and tries to setup the same call through the PS domain.
- The RNC sends an INVITE message 210 to both parts of the communication.
- If everything goes well, then a SESSION PROGRESS message 320 is received by the RNC from UE and Core Network.
- Then the UEs establish the PDP context to carry the VoIP traffic, so the UE sends an Activate PDP Context Request message 600 to the SGSN. Although in the figure this process is only shown for the mobile originating part, it is simultaneously performed in the mobile terminating part.
- In order to establish a PDP context it is needed to establish first a RAB, so the SGSN sends a RAB Assignment Request message 620 to the RNC to establish a PS RAB.
- Then, the RNC sends to the UE a RB Setup message 700 that is answered by the UE with a RB Setup Complete message 1310, which is followed by a RAB Assignment Response message 1320 sent from the RNC to the SGSN. Once the RAB has been established, the Activate PDP Context Accept 345 message is sent to the UEs, and the PDP context is established for the VoIP call. Finally, an OK message 230 is sent to the RNC to start the VoIP packet transaction.

In order to implement the functionality of the embodiments according to the present invention described with reference to figures 5, 9 and 13, the RNC is loaded with a suitable computer program. The rest of the network nodes and the UE may be standard apparatuses. Only signalling messages that are already defined in the applicable standards may be used, there is no need to use proprietary signalling messages or to standardise new signalling messages.

While the invention has been illustrated and described in detail in the drawings and foregoing description, such illustration and description are to be considered illustrative or exemplary and not restrictive; the invention is not limited to the disclosed embodiments.

Of course the invention may be implemented with fixed or cellular networks working according to different standards than the ones disclosed in the present description. Furthermore, the functionality needed to implement the present invention may be located in other network nodes than the RNC.

Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored and/or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for setting-up calls in a communication network (10), the method comprising the steps of:
- attempting to set-up a call between a call originator and a call destination using a communication connection of a first type; and
- determining that the call cannot be set-up using the communication connection of the first type;
- **characterised by** the step of the communication network setting up the call to both the call originator and the call destination using a communication connection of a second type.

2. Method according to claim 1 wherein the communication network (10) is a third generation cellular network.

3. Method according to claim 1 or 2 wherein the communication connection of the first type is a circuit switched core network connection and the communication connection of the second type is a packet switched core network connection.

4. Method according to claim 1 or 2 wherein the communication connection of the first type is a packet switched core network connection and the communication connection of the second type is a circuit switched core network connection.

5. Method according to claim 3 or claim 4, wherein the call is a voice call and the voice call over the packet switched core network connection is a voice over IP call.

6. Method according to any one of claims 1-5 wherein the step of determining is performed by detecting a signalling message (650,1010) regarding a call failure.

7. Method according to any one of claims 1-6 wherein the step of the communication network setting up using the communication connection of the second type is performed by a network node by transmitting signalling messages that are also used for a normal call set-up using the communication connection of the second type.

8. Communication network (10) comprising:
- means for attempting to set-up a call between a call originator and a call destination using a communication connection of a first type; and
- means for determining that the call cannot be set-up using the communication connection of the first type;
- **characterised by** means for setting up the call using a communication connection of a second type to both the call originator and the call destination.

9. Communication network according to claim 8 being a third generation cellular network.

10. Communication network according to claim 8 or claim 9 wherein the communication connection of the first type is a circuit switched core network connection and the communication connection of the second type is a packet switched core network connection

11. Communication network according to claim 8 or claim 9 wherein the communication connection of the first type is a packet switched core network connection and the communication connection of the second type is a circuit switched core network connection.

12. Communication network according to claim 10 or claim 11, wherein the call is a voice call and the voice call over the packet switched core network connection is a voice over IP call.

13. Communication network according to any one of claims 8-12 wherein the means for determining that the call cannot be set-up using the communication connection of the first type are adapted for detecting a signalling message (650,1010) regarding a call failure.

14. Communication network according to any one of claims 8-13 further comprising a network node, the network node including said means for setting up the call using the communication connection of the second type to both the call originator and the call destination and wherein said means are adapted for transmitting signalling messages for this purpose, which are also used for a normal call set-up using the communication connection of the second type.
